(19) Europäisches Patentamt
European Patent Office
Office européen des brevets

(11) **EP 4 660 888 A1**

(12) **EUROPEAN PATENT APPLICATION**

(43) Date of publication:
**10.12.2025 Bulletin 2025/50**

(21) Application number: 24180309.7

(22) Date of filing: **05.06.2024**

(51) International Patent Classification (IPC):
**G06N 3/09** (2023.01)    **G06N 20/00** (2019.01)

(52) Cooperative Patent Classification (CPC):
**G06N 3/045; G06N 3/09; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
- **van de Meent, Jan-Willem**
  **3523 KA Utrecht (NL)**
- **Welling, Max**
  **1402 GN Bussum (NL)**
- **Naesseth, Christian Andersson**
  **1018 LH Amsterdam (NL)**
- **Eijkelboom, Floor**
  **1135 VL Edam (NL)**
- **Bartosh, Grigory**
  **1012 WP Amsterdam (NL)**

(54) **DEVICE AND METHOD FOR TRAINING A CONTINUOUS NORMALIZING FLOW FOR PROCESSING SENSOR SIGNALS**

(57)    Computer-implemented method for training a continuous normalizing flow (60), wherein the continuous normalizing flow (60) is configured to a accept sensor signal (S) or a representation (30) of the sensor signal (S) as input and wherein the continuous normalizing flow (60) is trained using a flow matching method, characterized in that the vector field used in the flow matching method is approximated using variational inference.

**Fig. 1**

**Description**

Technical field

The invention concerns a computer-implemented method for training a continuous normalizing flow for processing sensor signals, a computer-implemented method for classifying a sensor signal as anomalous or not, a computer-implemented method for generating sensor signals for training and/or testing a machine learning system, a training system, a control system, a computer program and a machine-readable storage device.

Prior art

Chen et al. "Neural Ordinary Differential Equations", 2019, https://arxiv.org/pdf/1806.07366 discloses continuous normalizing flows.
Lipman et al. "Flow Matching for Generative Modeling", 2023, https://arxiv.org/pdf/2210.02747 discloses a simulation-free approach for training CNFs based on regressing vector fields of fixed conditional probability paths.

Technical background

Modern automated systems rely on sensing their physical environment through suitable sensors, determining an internal "copy" of the environment based on the obtained sensor signals and determining a based action based on this copy. For example, in robotics, a robot perceives its environment, determines objects or other entities in the environment to interact with or navigate around and then finally determine a best action to take based on the determined objects and/or entities.
Typically, statistical models are used to reconstruct or detect objects and other entities in the sensor signals. Especially neural network-based system for 2D or 3D object detection as well as semantic segmentation are increasingly used. These statistical models learn to predict elements of the environment based on the sensor signal, typically using supervised learning techniques. As potential safety critical operations are executed based on such a perception, perception systems typically require two elements: Being able to tell when a sensor signal received as input does not characterize a situation known to the statistical model, i.e., the sensor signal characterizing an anomaly with respect to what sensor signals are known, as well as requiring suitable amounts of training data to prepare the statistical model for as many different possible perceptions of the environment as possible.
Continuous normalizing flows (CNF) serve as a means to accomplish both tasks: They are capable of receiving sensor signals as inputs and provide density values or probability values indicating a likelihood of the sensor signal to appear, wherein the likelihood can again be used for anomaly classification. On the other hand, they can be used for generating samples of their input data, i.e., by providing a density value from the mathematical space of outputs of the CNF, pushing it through the CNF, thereby determining a prediction of what sensor signal would have been necessary to obtain the density value.
CNF training is quite costly as it requires solving a system of ordinary differential equations. An improvement to this approach is training a CNF by means of flow matching, which incurs the same computational cost in terms of training time as regular supervised learning.
Advantageously, the inventors found that the common flow matching algorithm can be improved upon using a method with the features of claim 1 by approximating the vector field of a CNF by means of variational inference. The inventors found that this leads to a better performance of the CNF in terms of both training time as well prediction capabilities, that is, the training method enables the generative paths of the vector field used in flow matching to align with feasible and realistic trajectories leading to better predictions an in turn more reliable anomaly classifications as well as more realistic generated sensor signals.

Disclosure of the invention

In a first aspect, the invention concerns a computer-implemented method for training a continuous normalizing flow, wherein the continuous normalizing flow is configured to a accept sensor signal or a representation of the sensor signal as input and wherein the continuous normalizing flow is trained using a flow matching method, characterized in that the vector field used in the flow matching method is approximated using variational inference.
The term "continuous normalizing flow" may be understood as a model or framework utilized in the field of machine learning, particularly for the purpose of understanding and transforming complex data distributions. This model is characterized by its ability to continuously transform data from a complex distribution (in this case, sensor signals) to a simple, known distribution. The continuous aspect of the normalizing flow refers to fact that the flow is defined in terms of a set of ODEs, which are continuous in time. In other normalizing flows, one typically assumes a discrete series of time steps, which can be interpreted as a discretization of a CNF.

In the context of sensor signals, the continuous normalizing flow may be particularly adept at processing and analyzing the raw values measured by sensors. These raw values, which can vary widely depending on the type and purpose of the sensor, often contain intricate patterns and structures that are not immediately apparent. The continuous normalizing flow operates on these raw values by applying a series of transformations, each of which is designed to incrementally modify the distribution of the data towards a target distribution that captures the essential characteristics of the sensor signals.

The ability of the continuous normalizing flow to operate directly on raw sensor values is of significant importance. It means that the model can potentially leverage the full granularity and richness of the sensor data, without the need for extensive preprocessing or feature extraction that might discard valuable information. This direct operation on raw values allows the continuous normalizing flow to learn intricate details and dependencies within the data, which can be crucial for tasks such as anomaly detection, pattern recognition, and predictive modeling in sensor-based systems. However, the sensor signals used as input to the continuous normalizing flow may also be transformed into a representation, wherein the representation is then used as input to the continuous normalizing flow. Such a representation may especially be the result of one or multiple preprocessing operations.

Moreover, the continuous nature of the transformations employed by the normalizing flow ensures that each step of the process is reversible and that the relationship between the input and output distributions is well-defined. This reversibility provides a clear understanding of how the sensor signal is transformed and interpreted by the model, facilitating insights into the underlying dynamics of the sensor data.

The term "vector field used in the flow matching method" may be understood as a mathematical construct or representation that is utilized within the context of the flow matching method, which is integral to the training of a continuous normalizing flow. In essence, a vector field in this context may be conceptualized as a collection or array of vectors, each of which indicates the direction and magnitude of data flow at various points within the space under consideration. This space is typically defined by the dimensions of the sensor signals being processed by the continuous normalizing flow.

In the process of training the continuous normalizing flow, the vector field plays a crucial role by guiding the transformation or mapping of sensor signals through the flow, thereby enabling the model to learn the underlying structure and dynamics of the data. The vector field essentially informs the continuous normalizing flow of how data points should be moved or transformed across the model's layers or stages to achieve a desired output or representation.

The specification of the vector field being approximated using variational inference introduces an approach to estimate or derive the vector field in a manner that is computationally efficient and more adaptable to complex data structures.

Variational inference, in this context, may be seen as a technique for approximating the true vector field by optimizing a set of parameters that define a simpler, more tractable version of the vector field. In particular, while the true vector field is defined in terms of a mathematical integral that cannot be computed numerically, the invention proposes to approximate the true vector field which a tractable vector field that can be computed using a machine learning system, e.g., a neural network. This approximation process allows for the efficient training of the continuous normalizing flow, even in scenarios where the exact form of the vector field is complex or unknown. Through the use of variational inference, the method allows for a balance between the accuracy of the vector field approximation and the computational resources required for such an approximation. This balance is critical for ensuring that the continuous normalizing flow can be trained effectively and efficiently, thereby enhancing its ability to process and learn from sensor signals in a wide range of applications.

In flow matching, the aim is to regress the underlying vector field of a CNF directly on the interval $t \in [0,1]$. Flow matching leverages the fact that even though one does not have access to the actual underlying vector field (denoted as $u_t$ in the following), and probability path $p_t$ one can construct a per-example formulation by defining conditional flows, i.e., the trajectories towards specific data points $x_1$. Concretely flow matching defines

$$u_t(x) = \int u_t(x|x_1) \frac{p_t(x|x_1) p_{data}(x_1)}{p_{t(x)}} dx_1 \, ,$$

where $u_t(x|x_1)$ is the conditional trajectory.

An advantage of flow matching is that this conditional trajectory $u_t(x|x_1)$ can be chosen to make the problem tractable. In contrast to likelihood-based training of CNFs, flow matching is simulation free, i.e., does not require a numerical integration of the system of ODEs defined by the CNF, leading to a scalable approach to learning CNFs.

The inventors found that in any flow matching problem, the vector field of the equation above can be expressed as an expectation

$$u_t(x) = \int u_t(x|x_1)p_t(x_1|x)dx_1 = \mathbb{E}_{p_t(x_1|x)}[u_t(x|x_1)],$$

where $p_t(x_1|x)$ is the posterior probability path, the distribution over possible end points $x_1$ of paths passing through $x$ at time $t$,

$$p_t(x_1|x) := \frac{p_t(x,x_1)}{p_t(x)}, p_t(x,x_1) := p\_t(x|x_1)p_{data}(x_1).$$

Intuitively, the velocity in point $x$ expressed in the vector field is given by all the continuations from $x$ to final points $x_1$, weighted by how likely that final point is given that one is at $x$.

The inventors further found that rather than predicting the vector field directly, one can define an approximate vector field in terms of an expectation with respect to a variational distribution $q_t^\theta$ with parameters $\theta$:

$$v_t^\theta(x) := \int u_t(x|x_1)q_t^\theta(x_1|x)dx_1.$$

In this construction, $v_t^\theta$ will be equal to $u_t$ when $q_t^\theta$ and $p_t(x_1|x)$ are identical. The inventors hence found that flow matching can be matched onto a variational inference problem. Concretely, this so called variational flow matching can be defined in terms of minimizing a Kullback-Leibler divergence, which can be expressed as:

$$\mathrm{argmin}_\theta -\mathbb{E}_{t,x,x_1}[\log q_t^\theta(x_1|x)] + const.$$

Preferably, *const* can be set to 0, leading to a preferred loss function of variational flow matching which can be expressed by the formula:

$$\mathcal{L}(\theta) = -\mathbb{E}_{t,x,x_1}[\log q_t^\theta(x_1|x)].$$

The inventors found that, advantageously, the loss function can be factorized into the dimensions of $q_t^\theta$ leading to the simplified loss function

$$\mathcal{L}_{MF-VFM} = -\mathbb{E}_{t,x,x_1}\left[\sum_{d=1}^{D} \log q_t(x_1^d|x)\right],$$

wherein $D$ is the number of dimensions of $q_t^\theta$ and $x_1^d$ is the value of dimension d for $x_1$.

For inference, the inventors found that the vector field $v_t^\theta$ can then be approximated according to the formula

$$v_t^\theta(x) = \frac{\mu_1 - x}{1 - t}, \mu_1 := \mathbb{E}_{q_t^\theta(x_1|x)}[x_1].$$

In all embodiments of the method, the term sensor signal may be understood as a digital measurement result of a sensor. The sensor may perceive an environment of a technical system and/or the technical system itself (e.g., certain physical properties of the technical system such as temperature, pressure, speed, acceleration, rotation, vibrations, power consumption, electrical current, amperage, or the like). The sensor may especially be an optical sensor with the sensor signal characterizing a measurement of the optical sensor, i.e., an image. The optical sensor may especially be a camera, a lidar, a radar, an ultrasonic sensor, or a thermal camera. The neural network using the sensor signal as input may especially be understood as the neural network operating on the low-level features of the sensor signal as input. For images, for example, the neural network may especially receive the pixel values as input and perform its computations based on these pixel values. For, e.g., audio data, the sensor signal may represent a spectrum of an audio signal or quantized samples of the audio signal. The neural network may hence operate on these values respectively.

The sensor signal may also be a time series of individual sensor readings from a predefined sensor. The sensor in this case may especially be a sensor for measuring as temperature, pressure, speed, acceleration, rotation, vibrations, power consumption, electrical current, amperage, or the like.

It is understood that the term "sensor signal" also covers pre-processed results of a raw sensor signal. For example, if a raw sensor signal is provided to a preprocessing function and the neural network is provided the pre-processed result of the sensor signal, this is still understood as "the neural network receiving the sensor signal as input".

Advantageously, the method for training enables a highly efficient and precise modeling of complex data distributions of sensor signals, which are often characterized by high dimensionality and intricate structures. These sensor signals, in essence, characterize measurements of physical reality, capturing various phenomena such as presence of entities in the real world, temperature fluctuations, motion patterns, or chemical concentrations. The density value or probability values therefore directly characterize a probability of a certain phenomenon encoded by a sensor signal, for example the presence of a certain object when using images as sensor signals.

In particular, the authors found that the method improves upon the standard flow matching method of Lipman et al. using the same neural network architecture and different toy datasets as well as datasets such as CIFAR1 0.

Another advantage of the method is the improvement of computational efficiency in the modeling of complex data distributions of sensor signals due to variational inference. The authors found that using the training method disclosed above, generative paths align with feasible and realistic trajectories of the vector field. This efficiency is particularly beneficial when dealing with large volumes of sensor data. This leads to a faster convergence as - compared to known flow matching methods - misaligned paths are never explored.

Furthermore, the precise modeling through continuous normalizing flows extends to the domain of generative modeling. By learning the complex distribution of sensor data, the model can generate new data points that faithfully replicate the statistical properties of the original sensor signals used for training. This capability can advantageously be used for tasks such as data augmentation, where additional data points are needed to train more robust machine learning models, or for simulation purposes, where realistic sensor data is required to test algorithms or systems under various conditions.

In preferred embodiments, the continuous normalizing flow (60) is characterized by a neural network that takes the sensor signal and a desired time as input and provides an output signal characterizing the mean of the variational distribution, wherein the variational distribution approximates a posterior distribution of possible endpoints in the vector field given a point in the vector field and the time.

In other words, the neural network predicts at least the mean of the variational distribution, which may then be used in the method as a parameter of the variational distribution in order to predict the density or the probability $p_t$.

In all embodiments of the method, the term "time" may be understood as a parameter that facilitates the continuous transformation of data within a Continuous Normalizing Flow (CNF). This parameter does not necessarily correspond to physical time as commonly understood in the context of chronological progression, but rather serves as an abstract dimension along which data undergoes a series of transformations or transitions within the CNF model. In practical terms, "time" may dictate the rate at which the data evolves within the model, influencing the path and the intermediate states that the data assumes as it is transformed by the CNF.

In certain embodiments, "time" may also be employed as a mechanism for temporal regularization within the CNF. By adjusting the transformation rate and ensuring smooth transitions between data states, the model can prevent abrupt changes in the data distribution, thereby enhancing the stability and reliability of the learning process. This regularization aspect underscores the technical utility of the "time" parameter in refining the model's performance and ensuring the generation of coherent and accurate outputs.

Furthermore, the abstraction of "time" in CNFs may be particularly advantageous in applications involving sequential data or data that exhibits temporal patterns. In such cases, the "time" parameter can be aligned with the inherent temporal characteristics of the data, allowing the CNF to capture and model dynamic behaviors and relationships within the data more effectively.

The phrase "the continuous normalizing flow is characterized by a neural network" may be understood to imply that the architecture or operational framework of the continuous normalizing flow incorporates or utilizes a neural network as a component or mechanism for its functionality. This neural network is designed to accept sensor signals or representations thereof, along with a specified time, and processes these inputs to generate an output signal. This output signal is indicative of the mean of the variational distribution, i.e., the output signal may be the mean or may comprise other elements alongside of the mean.

It should be noted that while the continuous normalizing flow is characterized by the inclusion of a neural network in this embodiment, the specific architecture, configuration, or type of neural network employed can vary. The neural network could be, for example, a feedforward neural network, a convolutional neural network, a recurrent neural network, or any other suitable type of neural network known in the art. The choice of neural network may depend on factors such as the nature of the sensor signals, the complexity of the data, and the specific requirements of the flow matching method being utilized. In particular, the architecture of the neural network may be understood as a hyperparameter of the method that may be tuned using common hyperparameter optimization techniques.

Preferably, the variational distribution is a Normal distribution or a categorical distribution.

Advantageously, using a Normal distribution allows for predictions of continuous values with respect to the input data in the form of density values. These density values can be used as direct proxies for anomaly detection, i.e., if a density value, a mean of the density values, or a sum of the density values falls under a predefined threshold, a corresponding sensor signal may be classified as anomalous.

Alternatively, the categorical distribution has the advantage of enabling the CNF to perform a classification of the sensor signal into the respective categories used in the categorical distribution. That is, the CNF learns to classify the input data in an unsupervised fashion into a given amount of classes.

In other aspects, the invention concerns the application of the trained CNF during inference.

In particular, the invention also concerns computer-implemented method for classifying a sensor signal as anomalous or normal comprising the steps of:

- Obtaining a continuous normalizing flow trained according to any one embodiment as presented above;
- Providing the sensor signal or a representation of the sensor signal to the continuous normalizing flow, wherein the continuous normalizing flow predicts an output characterizing a density value or probability value for a value in the sensor signal;
- Classifying the sensor signal is classified as anomalous if the output is equal to or below a predefined threshold.

Obtaining the continuous normalizing flow trained according to any one embodiment as presented above may be understood as the respective steps of the training method being executed as part of the method for classifying. Alternatively, it may also be understood as obtaining an already trained CNF, e.g., by downloading it from the internet.

It is to be noted that CNFs are typically defined such that the "forward" direction of the CNF is from a "simple data distribution" (in this case the variational distribution) to a "complex distribution" (in this case the sensor signals). This means that for the method for classifying, the CNF is used in what can be considered "backward" mode.

Whether the predicted value characterizes a density value or a probability value depends on the variational distribution. For example, when using a Normal distribution, the predicted value is a density, when using a Categorical distribution, the value is a probability.

Inference may be performed according to known CNF inference methods, e.g., the one described in Chen et al., wherein the vector field is approximated as described above.

The invention also concerns a computer-implemented method for determining a sensor signal for training and/or testing a machine learning system, in particular a classification or regressions system, comprising the steps of:

- Obtaining a continuous normalizing flow trained according to any one of the claims 1 to 5, wherein the normalizing flow is trained using sensor signals as input;
- Obtaining, preferably at random, a point in the space of outputs of the continuous normalizing flow;
- Propagating the output through the continuous normalizing flow thereby determining the sensor signal.

Obtaining the continuous normalizing flow trained according to any one embodiment as presented above may, again, be understood as the respective steps of the training method being executed as part of the method for classifying. Alternatively, it may also be understood as obtaining an already trained CNF, e.g., by downloading it from the internet.

The step of "propagating the output through the CNF" may be understood as applying the CNF's transformations to an output data point. That is, the output data point from the "simple" distribution as described above is transformed to the "complex" distribution of sensor signals.

This can be done using the same steps as in regular CNF computations (e.g., using the method of Chen et al.) except for predicting the vector field according to the formula

$$v_t^\theta(x) = \frac{\mu_1 - x}{1 - t}, \mu_1 := \mathbb{E}_{q_t^\theta(x_1|x)}[x_1].$$

as described above.

Embodiments of the invention will be discussed with reference to the following figures in more detail. The figures show:

Figure 1      a training system for training a continuous normalizing flow;

Figure 2      a control system comprising a machine learning system controlling an actuator in its environment;

Figure 3      the control system controlling an at least partially autonomous robot;

Figure 4      the control system controlling a manufacturing machine.

Description of the embodiments

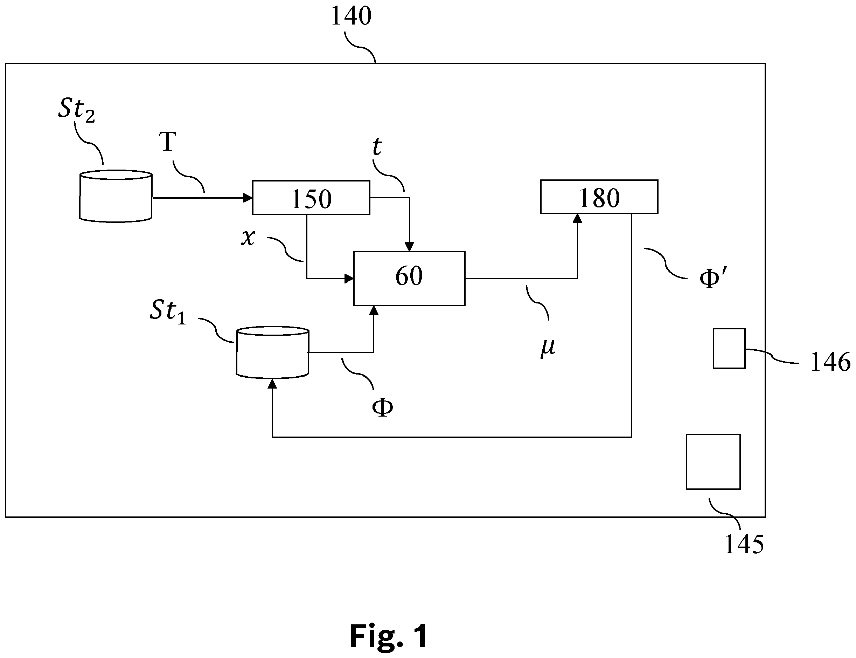

Figure 1 shows an embodiment of a training system (140) for training a continuous normalizing flow (60) by means of a training data set (T). The training data set (T) comprises a plurality of sensor signals ($x_i$) which are used for training the continuous normalizing flow (60).

For training, a training data unit (150) accesses a computer-implemented database ($St_2$), the database ($St_2$) providing the training data set (T). The training data unit (150) determines from the training data set (T) preferably randomly at least one sensor signal ($x$) and further determines a desired time ($t$), preferably at random from a uniform distribution with limits [0,1]. The training data unit (150) transmits the sensor signal ($x$) and the time ($t$) to the continuous normalizing flow (60). The continuous normalizing flow (60) determines an output signal ($\mu$) based on the sensor signal ($x$).

The determined output signal ($y$) is transmitted to a modification unit (180).

Based on the determined output signal ($y$), the modification unit (180) then determines new parameters ($\Phi'$) for the continuous normalizing flow (60). For this purpose, the modification unit (180) determines a loss value using a loss function. The loss function can be expressed in terms of the formula:

$$\mathcal{L}(\theta) = -\mathbb{E}_{t,x,x_1}[\log q_t^\theta(x_1|x)].$$

The distribution $q_t^\theta$ is a variational distribution of the method for training. Preferably a Normal distribution or a categorical distribution is used as variational distribution. The continuous normalizing flow (60) comprises a neural network that preferably predicts a mean ($\mu$) of the variational distribution, wherein the loss value is then determined by using the mean as parameter of the function and evaluating the variational distribution using this mean, similar to how it is done in variational auto encoders. The variance of the distribution is irrelevant as the logarithm would only have the variance impact the loss function in terms of a constant offset, which has no effect on the optimization target and only offsets the loss value.

The modification unit (180) determines the new parameters ($\Phi'$) of the neural network based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the neural network of the continuous normalizing flow (60).

Furthermore, the training system (140) may comprise at least one processor (145) and at least one machine-readable storage medium (146) containing instructions which, when executed by the processor (145), cause the training system (140) to execute a training method according to one of the aspects of the invention.

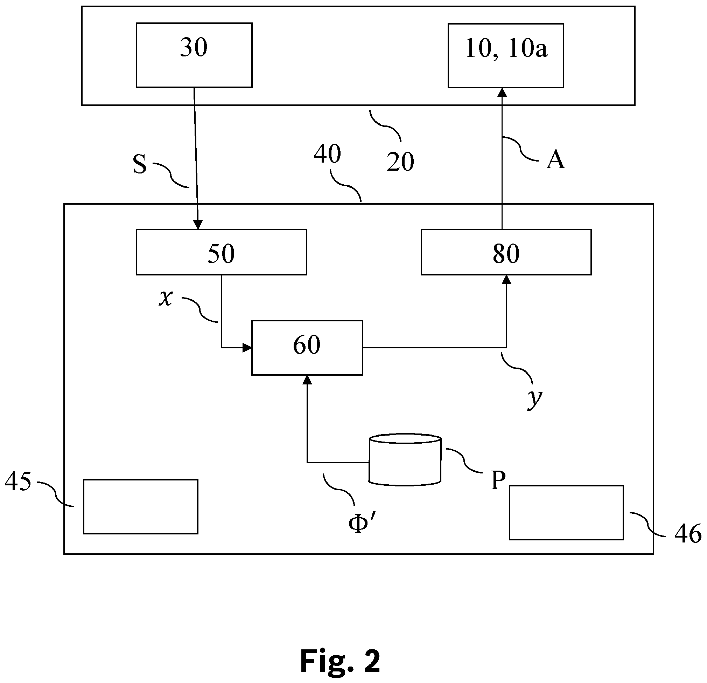

Figure 2 shows an embodiment of a control system (40) controlling an actuator (10) in its environment (20). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into sensor signals ($x$). Alternatively, in case of no receiving unit (50), each sensor signal (S) may directly be taken as an sensor signal ($x$). The sensor signal ($x$) may, for example, be given as an excerpt from the sensor signal (S). Alternatively, the sensor signal (S) may be processed to yield the sensor signal (*x*). In other words, the sensor signal (*x*) is provided in accordance with the sensor signal (S).

The sensor signal (*x*) is then passed on to a continuous normalizing flow (60) trained as described above.

The neural network of the continuous normalizing flow (60) is parametrized by parameters ($\Phi$), which are stored in and provided by a parameter storage ($St_1$).

The continuous normalizing flow (60) determines an output signal (*y*) from the sensor signals (*x*). The output signal characterizes density values or probability values for the output signal (*y*). The output signal (*y*) is transmitted to a conversion unit (80), which converts the output signal (*y*) into the control signals (A). The control signal is determined based on the density values or probability values. If a mean or a sum of the density values or the probability values is equal to or is below a predefined threshold, this indicates an anomaly in the sensor signal (*x*). The conversion unit (80) determines the control signal (A) according to the classification of the sensor signal (*x*) as anomalous or normal. The control signals (A) are then transmitted to the actuator (10) for controlling the actuator (10) accordingly.

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

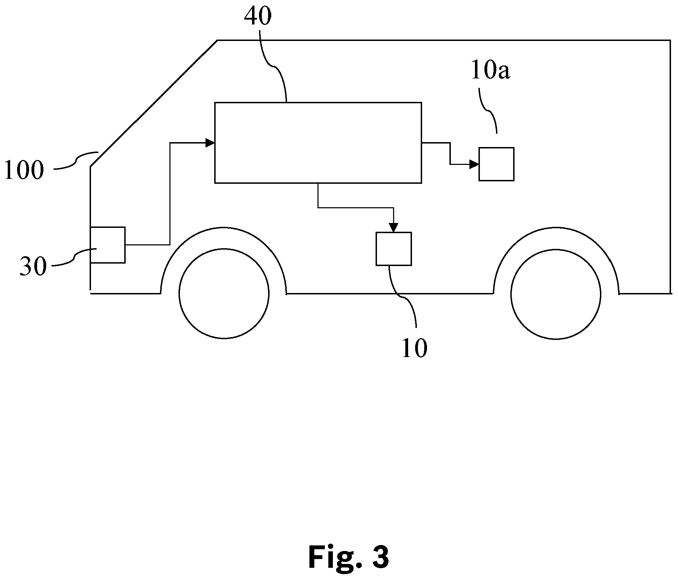

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The sensor signal (*x*) may hence be understood as an input image and the continuous normalizing flow (60) as an image classifier.

The output signal (*y*) may comprise an information, which characterizes if the sensor signal (*x*) received from the sensor (30) represents an anomaly or is normal. The control signal (A) may then be determined in accordance with this information, for example to hand control of the at least partially autonomous vehicle over to a human driver or remote operator.

The actuator (10), which is preferably integrated in the vehicle (100), may be given by a brake, a propulsion system, an engine, a drivetrain, or a steering of the vehicle (100).

Alternatively or additionally, the control signal (A) may also be used to control the display (10a), e.g., for displaying anomalous sensor signals (30) as detected by the continuous normalizing flow (60). It can also be imagined that the control signal (A) may control the display (10a) such that it produces a warning signal if the sensor signal (*x*) is determined to be anomalous. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

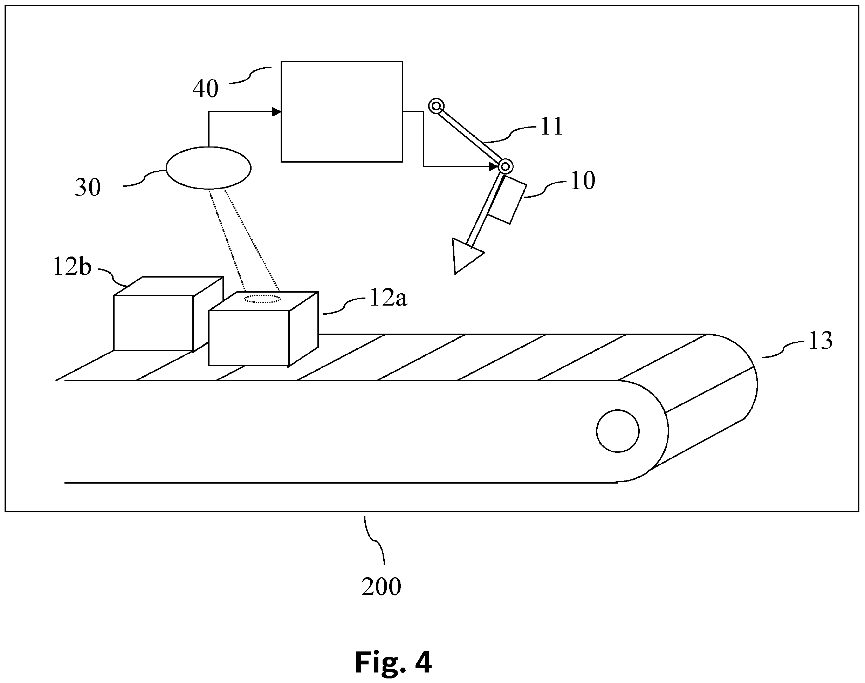

Figure 4 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11). The control system (40) may also control an automated optical inspection system (not shown) of the manufactured product (12). The automated optical inspection system may especially determine of the manufactured product is ok or not. The manufactured product (12) may be considered as not ok if the continuous normalizing flow (60) determines an image (x) of the manufactured good (12) to be anomalous.

The sensor (30) may be given by an optical sensor which captures properties of, e.g., a manufactured product (12). The continuous normalizing flow (60) may hence be understood as an image classifier.

If the control system (40) determines the manufactured good (12) to be anomalous, the actuator (10) may be controlled as to remove the manufactured product (12) from the transportation device (13).

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method for training a continuous normalizing flow (60), wherein the continuous normalizing flow (60) is configured to a accept sensor signal (S) or a representation (30) of the sensor signal (S) as input and wherein the continuous normalizing flow (60) is trained using a flow matching method, **characterized in that** the vector field used in the flow matching method is approximated using variational inference.

2. Method according to claim 1, wherein the continuous normalizing flow (60) is **characterized by** a neural network that takes the sensor signal (x) and a desired time (it) as input and provides an output signal ($\mu$) characterizing the mean of a variational distribution, wherein the variational distribution approximates a posterior distribution of possible endpoints in the vector field given a point in the vector field and the time.

3. Method according to claim 2, wherein training the continuous normalizing flow (60) comprises training the neural network using a loss function, wherein the loss function is **characterized by** the formula:

$$\mathcal{L}_{VMF} = -\mathbb{E}_{t,x,x_1}[\log q_t(x_1|x)],$$

wherein $q_t$ is the variational distribution at time $t$ for which the neural network predicts the mean, wherein $q_t$ approximates a distribution over possible end points $x_1$ of paths passing through $x$ at time $t$.

4. Method according to claim 3, wherein the loss function is **characterized by** the formula:

$$\mathcal{L}_{MF-VFM} = -\mathbb{E}_{t,x,x_1}\left[\sum_{d=1}^{D} \log q_t(x_1^d|x)\right],$$

wherein $D$ is the number of dimensions of output of the neural network and $x_1^d$ is the value of dimension $d$ for $x_1$.

5. Method according to anyone of the claims 2 to 4, wherein the variational distribution is a Normal distribution or a categorical distribution.

6. Computer-implemented method for classifying a sensor signal (x) as anomalous or normal comprising the steps of:

   • Obtaining a continuous normalizing flow (60) trained according to any one of the claims 1 to 5;
   • Providing the sensor signal (x) or a representation of the sensor signal (x) to the continuous normalizing flow, wherein the continuous normalizing flow (60) predicts an output characterizing a density value or probability value for a value in the sensor signal;
   • Classifying the sensor signal (x) as anomalous if the output is equal to or below a predefined threshold.

7. Computer-implemented method for determining a sensor signal for training and/or testing a classification or regressions system comprising the steps of:

> • Obtaining a continuous normalizing flow (60) trained according to any one of the claims 1 to 5, wherein the continuous normalizing flow (60) is trained using sensor signals ($x$) as input;
> • Obtaining, preferably at random, a point in the space of outputs of the continuous normalizing flow (60);
> • Propagating the output backwards through the continuous normalizing flow (60) thereby determining the sensor signal.

8. Training system (140), which is configured to carry out the training method according to any one of the claims 1 to 5.

9. Control system (40), which is configured to carry out the method according to claim 6, wherein the control system (40) determines a control signal (A) based on the classification of the sensor signal ($x$) as anomalous or normal, wherein the control signal (A) is configured to control an actuator (10) and/or a display (10a).

10. Computer program that is configured to cause a computer to carry out the method according to any one of the claims 1 to 7 with all of its steps if the computer program is carried out by a processor (45, 145).

11. Machine-readable storage medium (46, 146) on which the computer program according to claim 10 is stored.

**Fig. 1**

**Fig. 2**

40

10a

100

30

10

Fig. 3

Fig. 4

EUROPEAN SEARCH REPORT

**Application Number**

EP 24 18 0309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lipman Yaron ET AL: "FLOW MATCHING FOR GENERATIVE MODELING", , 8 February 2023 (2023-02-08), XP093224743, Retrieved from the Internet: URL:https://arxiv.org/pdf/2210.02747 * sections 1, 2, 3.2; figures 1,14 * | 1-11 | INV. G06N3/09 G06N20/00 |
| A | BLEI DAVID M. ET AL: "Variational Inference: A Review for Statisticians", JOURNAL OF THE AMERICAN STATISTICAL ASSOCIATION, vol. 112, no. 518, 9 May 2018 (2018-05-09) , pages 859-877, XP093224746, US ISSN: 0162-1459, DOI: 10.1080/01621459.2017.1285773 Retrieved from the Internet: URL:https://arxiv.org/pdf/1601.00670> * abstract * * section 2.1 * | 1-11 | |
| A | Anonymous: "Discrete Probability Distributions for Machine Learning - GeeksforGeeks", , 18 March 2024 (2024-03-18), XP093224720, Retrieved from the Internet: URL:https://www.geeksforgeeks.org/discrete -probability-distributions-for-machine-lea rning/ * page 1; figures 1,14 * -/-- | 1-11 | TECHNICAL FIELDS SEARCHED (IPC) G06N |

The present search report has been drawn up for all claims

| Place of search | Date of completion of the search | Examiner |
|---|---|---|
| Munich | 15 November 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 18 0309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Ghojogh Benyamin ET AL: "Probabilistic Classification by Density Estimation Using Gaussian Mixture Model and Masked Autoregressive Flow", , 16 October 2023 (2023-10-16), XP093224726, Retrieved from the Internet: URL:https://arxiv.org/pdf/2310.10843 * abstract * * section 5 * ----- | 1-11 | |
| | | | **TECHNICAL FIELDS SEARCHED (IPC)** |

The present search report has been drawn up for all claims

| Place of search | Date of completion of the search | Examiner |
|---|---|---|
| Munich | 15 November 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN et al.** *Neural Ordinary Differential Equations*, 2019, https://arxiv.org/pdf/1806.07366 discloses continuous normalizing flows

- **LIPMAN et al.** *Flow Matching for Generative Modeling*, 2023, https://arxiv.org/pdf/2210.02747